# EUROPÄISCHE PATENTSCHRIFT

(11) **EP 1 022 182 B1**
(45) Veröffentlichungstag und Bekanntmachung des Hinweises auf die Patenterteilung: **16.03.2011**
(21) Anmeldenummer: 00100987.7
(22) Anmeldetag: 19.01.2000
(51) Int. Cl.: B60L 11/02

(54) **Antriebssystem für Fahrzeuge, insbesondere für Nutzkraftwagen und elektrische Baueinheit**
Drive system for automobile, especially for commercial vehicles, and electrical unit
Système d' entraînement pour automobile, de préférence pour véhicule commercial, et unité électrique

(30) Priorität: 20.01.1999 DE 19901954
(43) Veröffentlichungstag der Anmeldung: 26.07.2000
(73) Patentinhaber: Voith Turbo GmbH & Co. KG, 89522 Heidenheim (DE)
(72) Erfinder: Mühlberger, Uwe, 89522 Heidenheim (DE)
(74) Vertreter: Dr. Weitzel & Partner

(56) Entgegenhaltungen:
- EP-A- 0 660 501
- EP-A- 0 878 339
- DE-A- 3 231 959
- DE-A- 19 729 382
- DE-C- 19 707 763

## Beschreibung

Die Erfindung betrifft ein Antriebssystem für Fahrzeuge, insbesondere für Nutzkraftfahrzeuge, im einzelnen mit den Merkmalen aus dem Oberbegriff des Anspruchs 1. und

Dieselelektrische Antriebssysteme für Fahrzeuge, insbesondere Nutzfahrzeuge, sind hinsichtlich der Ausgestaltung der einzelnen Komponenten und deren Kopplung in einer Vielzahl von Ausführungen bekannt. Beispielsweise offenbart der Sonderdruck G 1401 der J. M. Voith GmbH ein dieselelektrisches Antriebssystem für Nutzfahrzeuge, insbesondere Stadtbusse. Dieses umfaßt mindestens einen, mit einem Antriebsrad wenigstens mittelbar gekoppelten und als sogenannten Radmotor fungierenden Elektromotor, welcher vorzugsweise als Transversalflußmaschine ausgeführt ist. Der Elektromotor kann dabei direkt dem anzutreibenden Rad zugeordnet sein oder in entsprechender Entfernung am Fahrzeugrahmen über Wellenstränge mit den anzutreibenden Rädern gekoppelt werden. Jeder Elektromotor wird jeweils von einer Wechselrichtereinheit mit elektrischer Leistung versorgt. Des weiteren ist eine, im Traktionsbetrieb als Generator betreibbare elektrische Maschine vorgesehen, welche ebenfalls vorzugsweise als Transversalflußmaschine ausgeführt sein kann, die mechanisch mit einer Verbrennungskraftmaschine, insbesondere einem Dieselmotor, koppelbar ist. Zur Erzeugung der elektrischen Leistung wird die als Generator betreibbare elektrische Maschine durch einen Umrichter, beispielsweise in Form eines 4-Quadranten-Wechselrichters, angesteuert. Für die Vorgabe der Sollwerte der Radmotoren (Drehmoment, Strom) sowie die Drehzahlsteuerung des Dieselmotors ist eine übergeordnete Fahrsteuerung vorgesehen, welche unter anderem in der Lage ist, den Fahrerwunsch auszuwerten. Die als Generator betreibbare elektrische Maschine wird dabei wenigstens im Fahrbetrieb, d.h. bei Kraftflußrichtung von der Verbrennungskraftmaschine zu den Antriebsrädern, als Generator betrieben.

Die elektrische Kopplung zwischen dem Generator und den als Fahrmotoren fungierenden Elektromotoren ist in der Regel vorzugsweise als Gleichspannungszwischenkreis ausgeführt. Zur Umformung des Wechselstromes in Gleichstrom bzw. zur Gleichrichtung und umgekehrt sind dabei entsprechende Einrichtungen vorzusehen. Diese Funktion übernehmen sogenannte Umrichtereinheiten, welche beispielsweise in Form von Wechselrichtern ausgeführt sind.

Derzeit werden die Umrichtereinheiten, welche der im Traktionsbetrieb als Generator betreibbaren elektrischen Maschine und den als Antriebsmotoren fungierenden Elektromotoren zugeordnet sind, in unterschiedlichster Entfernung von den elektrischen Maschinen - der als Generator betreibbaren elektrischen Maschine und den als Antriebsmotoren fungierenden Elektromotoren - im Fahrzeug oder beim Einsatz von Bussen beispielsweise auch auf dem Dach des Busses untergebracht und über sogenannte geschirmte Leitungskabel mit den Aggregaten Generator und Motor gekoppelt. Zur Gewährleistung einer sicheren Betriebsweise sind zusätzlich zu den Leitungskabeln Kühlwasserleitungen zwischen den Umrichtereinheiten, der als Generator betreibbaren elektrischen Maschine und den als Radantriebsmotoren fungierenden Elektromotoren zur Realsierung eines separaten Kühlkreislaufes vorzusehen. Aufgrund der räumlichen Trennung ist die dazu erforderliche Leitungsführung in der Regel sehr aufwendig und kompliziert. Des weiteren bedingt eine lange Kabelführung auch eine Erhöhung der frequenzabhängigen Wirkungen elektrischer, magnetischer und elektromagnetischer Felder auf die Umgebung, insbesondere Lebewesen und technische Systeme. Die unter dem Begriff elektromagnetische Verträglichkeit subsumierbare Auswirkung ist durch zahlreiche nationale und internationale Standards festgelegt. Zur Einhaltung dieser Grenzwerte ist eine entsprechende Schirmung vorzusehen. Diese ist jedoch entsprechend der erforderlichen Leitungsführung von der Anordnung der als Generator betreibbaren elektrischen Maschine, der der elektrischen Maschine zugeordneten Umrichtereinheit, den als Antriebsmotoren fungierenden Elektromotoren und den diesen zugeordneten Umrichtereinheiten abhängig und kann von Einsatzfall zu Einsatzfall stark voneinander differieren, wobei die sogenannte EMV-Schirmung für jeden Einsatzfall mit unterschiedlichen Randbedingungen extra vorgenommen werden muß.

Ein weiterer wesentlicher Nachteil der bisher bekannten Ausführung besteht darin, daß mit zunehmender Länge der Kühlwasserleitungen und/oder der elektrischen Verbindungskabel die Störanfälligkeit des Gesamtsystems zunimmt, was unter anderem auf die größere Wirkfläche für Isolationsschäden am Leitungskabel und für Leckagen im Kühlkreislauf zurückführbar ist.

Das Dokument DE 19707763 C1 beschreibt einen seriellen Hybrid-Antrieb für einen Bus mit einem Elektromotor, einem Generator sowie einem Umrichter, wobei der Elektromotor und der Generator über einen Spannungszwischenkreis elektrisch miteinander gekoppelt sind.

Das Dokument EP 0 660 501 A1 beschreibt einen Motorgenerator für ein Fahrzeug mit einem Umrichter, wobei der Motorgenerator und der Umrichter als bauliche Einheit ausgeführt sind.

Der Erfindung liegt daher die Aufgabe zugrunde, ein Antriebssystem der eingangs genannten Art derart weiter zu entwickeln, daß die genannten Nachteile vermieden werden. Im einzelnen ist auf eine möglichst einfache und kostengünstige Ausführung der Kopplung zwischen den elektrischen Bauelementen abzustellen, wobei die volle Funktionsfähigkeit weiterhin gewährleistet werden muß. Das Antriebssystem soll des weiteren für den Fahrzeughersteller leicht im Fahrzeug integrierbar sein, wobei aufwendige Installationen von Verbindungsleitungen und Kabeln vermieden werden sollten.

Die erfindungsgemäße Lösung ist durch die Merkmale des unabhängigen Anspruchs charakterisiert. Vorteilhafte Ausgestaltungen sind in den Unteransprüchen wiedergegeben.

Unter einem ersten Aspekt bilden erfindungsgemäß in einem Antriebssytem für Fahrzeuge, insbesondere für Nutzkraftwagen, mit mindestens einem, mit wenigstens einem Antriebsrad wenigstens mittelbar koppelbaren Elektromotor, mit einer mechanisch mit einer Verbrennungskraftmaschine koppelbaren und im Traktionsbetrieb als Generator betreibbaren elektrischen Maschine, welche über einen Spannungszwischenkreis elektrisch mit dem oder den als Antriebsmotoren fungierenden Elektromotoren koppelbar ist, die zur Realisierung der elektrischen Kopplung notwendigen Umrichtereinheiten, wenigstens jedoch die, welche der als Generator betreibbaren elektrischen Maschine oder den Elektromotoren zugeordnet sind, mit diesen eine bauliche Einheit. Der als Generator betreibbaren elektrischen Maschine ist dabei wenigstens eine Umrichtereinheit zur Erzeugung elektrischen Leistung zugeordnet, während den als Radmotoren fungierenden Elektromotoren zu deren Versorgung mit elektrischer Leistung ebenfalls jeweils wenigstens eine Umrichtereinheit zugeordnet ist. Dies bedeutet, daß die den einzelnen elektrischen Aggregaten - der als Generator betreibbaren elektrischen Maschine und/oder den als Antriebsmotoren fungierenden Elektromotoren - zugeordnete Umrichtereinheit direkt an den elektrischen Aggregaten angeordnet werden. Die als Antriebsmotoren fungierenden Elektromotoren können dabei im Bereich des anzutreibenden Rades oder aber in räumlicher Entfernung zu diesen angeordnet werden. Im letztgenannten Fall erfolgt die Leistungsübertragung dann vom Elektromotor über zusätzliche, vorzugsweise mechanische Übertragungselemente in Form von Wellensträngen auf das oder die anzutreibenden Räder.

Nach der Erfindung ist die Zusammenfassung von einem elektrischen Aggregat und der diesem zuordenbaren Umrichtereinheit auch von besonderem Vorteil für Antriebssysteme, bei welchem die als Antriebsmotoren fungierenden Elektromotoren nicht über eine Verbrennungskraftmaschine angetrieben werden, sondern über andere Energiequellen, beispielsweise von einer externen Energiequelle in Form einer Oberleitung oder einer Brennstoffzelle. In diesem Fall werden jeweils die als Antriebsmotoren fungierenden Elektromotoren und die diesen zugeordneten Umrichtereinheiten zu einer baulichen Einheit zusammengefaßt.

Die erfindungsgemäß Lösung bietet den Vorteil, daß zur Verbindung erforderliche Leitungskabel und zur Gewährleistung einer sicherer Betriebsweise erforderliche Kühlwasserleitungen, welche bisher die einzelnen Umrichtereinheiten mit der als Generator betreibbaren elektrischen Maschine bzw. den als Antriebsmotoren fungierenden Elektromotoren verbunden haben, nicht mehr erforderlich sind. Aufgrund der Reduzierung der Länge wird die mögliche Fläche, an welcher Isolationsschäden an den Leitungskabeln auftreten können, erheblich reduziert, so daß Isolationsschäden vermieden werden können. In Analogie gilt diese Aussage auch für den Kühlkreislauf, welcher nunmehr nicht mehr erforderlich ist, da die Kühlung durch die direkte oder indirekte Kühlung des elektrischen Aggregates mit gewährleistet werden kann. Dies ist jedoch abhängig von der konkreten Art der Kühlung der als Generator betreibbaren elektrischen Maschine und/oder der als Radmotoren fungierenden Elektromotoren.

Unter baulichen Einheit wird dabei in beiden Fällen eine Zusammenfassung des elektrischen Aggregates und der diesem zugeordneten Umrichtereinheit im Sinne des Anspruchs 1 verstanden, welche sich dadurch auszeichnet, daß baulich betrachtet keine räumliche Trennung erfolgt, d. h. die Umrichtereinheit wird im Bereich des elektrischen Aggregates angeordnet und berührt diese, unabhängig von den eventuell erforderlichen Verbindungsleitungen zur elektrischen Kopplung. Die der Umrichtereinheit zugehörigen Bauelemente sind in der Regel in einem Gehäuse zusammengefaßt. Über die Anschlüsse ist eine elektrische Kopplung mit dem elektrischen Aggregat - als Generator betreibbare elektrischen Maschine oder als Antriebsmotor fungierender Elektromotor - realisierbar. Die Umrichterbaueinheit weist dazu entsprechende Mittel, vorzugsweise in Form von verschraubten Verbindungen, auf.

Die Bildung einer baulichen Einheit aus elektrischem Aggregat und zugeordneter Umrichtereinheit kann unterschiedlich erfolgen. Wesentlich ist, daß immer eine elektrische Kopplung vorhanden ist. Zusätzlich ist die Umrichtereinheit mechanisch mit dem elektrischen Aggregat verbunden. Zur Realisierung der Kopplung sind folgende Varianten denkbar:
- formschlüssig
- kraftschlüssig
- stoffschlüssig.

Die konkrete Ausführung kann eine Kombination dieser Kopplungsmöglichkeiten umfassen. Im einfachsten Fall wird die mechanische Kopplung zwischen der Umrichtereinheit und dem dieser zugeordneten Aggregat über die Mittel zur elektrischen Kopplung realisiert. In diesem Fall werden die Mittel zur mechanischen Kopplung mit den Mitteln zur elektrischen Kopplung vom gleichen Bauelement bzw. den gleichen Bauelementen gebildet. D. h., daß durch die Realisierung einer elektrischen verschraubten Verbindung diese gleichzeitig die mechanische Kopplung zwischen dem elektrischen Aggregat und der diesem zugeordneten Umrichtereinheit ermöglicht. Dabei wird bereits durch die entsprechende Anordnung der Umrichtereinheit und die Ausführung der elektrischen Kopplung ein Tragen der Umrichtereinheit am elektrischen Aggregat realisiert.

Des weiteren besteht die Möglichkeit, die Mittel zur elektrischen Kopplung und die Mittel zur Realisierung einer mechanischen Kopplung unterschiedlichen Bauelementen zuzuordnen. Im einfachsten Fall erfolgt die mechanische Kopplung dazu über Mittel, welche eine Kopplung zwischen dem Gehäuse der Umrichtereinheit und dem Gehäuse oder einem anderen Trägerelement des elektrischen Aggregates ermöglichen. Diese können formflüssig, kraftschlüssig und/oder stoffschlüssig wirken. Dies bietet den Vorteil einer festen Zuordnung der Umrichtereinheit zum elektrischen Aggregat, wobei die Gesamtbaueinheit elektrisches Aggregat und Umrichtereinheit als ein Modul vormontiert und selbständig handelbar anbietbar ist.

Vorzugsweise wird eine Möglichkeit der Verbindung zum Einsatz gelangen, welche lösbar ist. Dies bietet den Vorteil des einfachen Austausches bei Betriebsstörungen und/oder bei gewünschter Anpassung an andere Randbedingungen, welche den Einsatz eines anderen Typs einer Umrichtereinheit erfordern.

Die Umrichtereinheiten selbst können dabei als Wechselrichtereinheiten unterschiedlichen Typs ausgeführt sein. In einfachsten Fall umfaßt eine Umrichtereinheit wenigstens eine Diodengleichrichtereinrichtung. Diese kann wiederum Zweige aufweisen, in denen eine Mehrzahl von Dioden
- parallel geschaltet und/oder
- in Reihe geschaltet
sind. Dabei werden vorzugsweise Dioden gleichen Typs verwendet. Insbesondere bei Ausführung der als Generator betreibbaren elektrischen Maschine als permanentmagneterregte Synchronmaschine ist die Ausführung der Umrichtereinheit in Form einer Diodengleichrichtereinheit besonders vorteilhaft. Diese stellt eine besonders kostengünstige und im Hinblick auf den Wirkungsgrad, den Bauraum und das Gewicht, vorteilhafte Ausführung dar. Bezüglich der weiteren Möglichkeiten der Ausführung von Umrichtereinheiten, insbesondere Wechselrichtereinheiten, wird auf die bekannte einschlägige Fachliteratur verwiesen. Die einzelnen Brückenschaltungen, welche neben den nicht steuerbaren Elementen in Form von Dioden auch die steuerbaren Elemente, beispielsweise in Form von Transistoren, umfassen, sind in einer Vielzahl von Ausführungsmöglichkeiten bekannt und sind Bestandteil des Grundwissens des auf diesem Gebiet tätigen Fachmannes.

Das erfindungsgemäße Antriebssystem ist derart gestaltet, daß jeweils die elektrischen Aggregate und die diesen zugeordnete Umrichtereinheit immer eine bauliche Einheit miteinander bilden. Die Umrichtereinheiten, welche wiederum elektrisch miteinander koppelbar sind, sind dabei vorzugsweise derart ausgeführt, daß diese zu einer Baugruppe zusammengefaßt werden können. Auch hierbei kann neben der elektrischen Kopplung eine zusätzliche mechanische Kopplung zwischen den, den Fahrmotoren zugeordneten Umrichtereinheiten und den der als Generator betreibbaren elektrischen Maschine zugeordneten Umrichtereinheit vorgesehen werden. Bezüglich der Ausführung der mechanischen Kopplung gelten die gleichen Aussagen wie für die Kopplung zwischen Umrichtereinheit und elektrischem Aggregat. Zur elektrischen und eventuell zusätzlichen mechanischen Kopplung der einzelnen Umrichtereinheiten sind entsprechende Mittel vorgesehen. Die Mittel zur elektrischen Kopplung sind dabei derart konzipiert, daß die miteinander koppelbaren Umrichtereinheiten einen Spannungszwischenkreis bilden.

Der erfindungsgemäße Aufbaus der Antriebsvorrichtung in axialer Richtung ist der folgende

Zusammenfassung der als Generator betreibbaren elektrischen Maschine und dem als Antriebsmotor fungierenden Elektromotor zu einer Einheit, d.h. Anordnung der elektrischen Aggregate ohne Abstand zueinander in Kraftflußrichtung, wobei die mit den elektrischen Aggregaten koppelbaren Umrichtereinheiten entweder
d1) unmittelbar aneinander angrenzen oder
d2) einen Abstand zueinander hinsichtlich ihrer Anschlüsse aufweisen.

Der erfindungsgemäße Aufbau stellt dabei eine bevorzugte und besonders kompakte und standardisierbare Ausführungsform für ein Antriebssystem dar. In diesem Fall kann vollständig auf Verbindungskabel sowie Kühlmittelleitungen zur Realsierung eines Kühlkreislaufes verzichtet werden. Die erforderliche EMV-Schirmung gestaltet sich sehr einfach, insbesondere muß eine derartige Schirmung nur als Typenprüfung für die jeweilige Einheit aus elektrischem Aggregat - Generator oder/und Motor - und Umrichtereinheit abgenommen werden. Die einfach realisierbare Kopplung der Baueinheiten ermöglicht es dem Endabnehmer, insbesondere Fahrzeughersteller, diese ohne aufwendige Installation im Gesamtsystem Fahrzeug zu integrieren.

Die Zusammenfassung der elektrischen Aggregate mit den Umrichtereinheiten führt zu keinerlei wesentlicher Vergrößerung der Bauhöhe bzw. Breite der als

Generator betreibbaren elektrischen Maschine bzw. des als Antriebsmotor im Traktionsbetrieb fungierenden Elektromotors, weshalb kein zusätzlicher Bauraum zur Verfügung gestellt werden muß. Der erforderliche Bauraum kann durch den Wegfall der erforderlichen Leitungskabel und Kühlkreislaufleitungen erheblich reduziert werden.

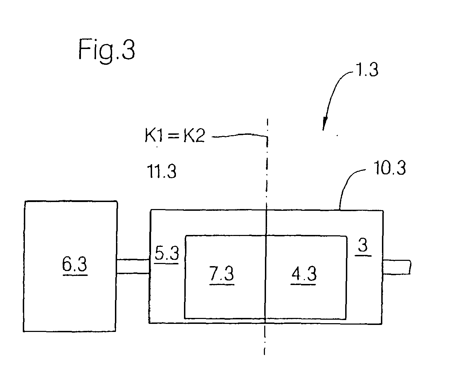

Die erfindungsgemäße Lösung wird nachfolgend anhand von Figur 3 erläutert. In den Figuren ist folgendes dargestellt:
- Figur 1a: verdeutlicht schematisch in vereinfachter Darstellung den Grundaufbau eines dieselelektrischen Antriebssystems mit Ausgestaltung der elektrischen Aggregate mit einer Umrichtereinheit als Baueinheit und Anordnung der Elektromotoren in räumlicher Entfernung von den anzutreibenden Rädern als technisches Beispiel;
- Figur 1b: verdeutlicht schematisch in vereinfachter Darstellung den Grundaufbau eines dieselelektrischen Antriebssystems mit Ausgestaltung der elektrischen Aggregate mit einer Umrichtereinheit als Baueinheit und Ausbildung der Elektromotoren als Radantriebsmotoren als technisches Beispiel;
- Figur 1c: verdeutlicht schematisch in vereinfachter Darstellung den Grundaufbau eines Antriebssystems mit externer Energiequelle und Ausgestaltung der elektrischen Aggregate mit einer Umrichtereinheit als Baueinheits als technisches Beispiel;
- Figur 2: verdeutlicht ein technisches Beispiel der Kopplung zwischen den Baueinheiten aus elektrischem Aggregat und Umrichtereinheit für eine Ausführung als Zentralmotorenantrieb anhand eines Ausschnittes aus einem Antriebssystem gemäß Figur 1b;
- Figur 3: verdeutlicht das Grundprinzip der erfindungsgemäßen Kopplung zwischen den elektrischen Aggregaten Generator und Motor miteinander und den diesen zugeordneten Umrichtereinheiten mit Eignung für den Einsatz in einem Antriebssystem gemäß Figur 1b.

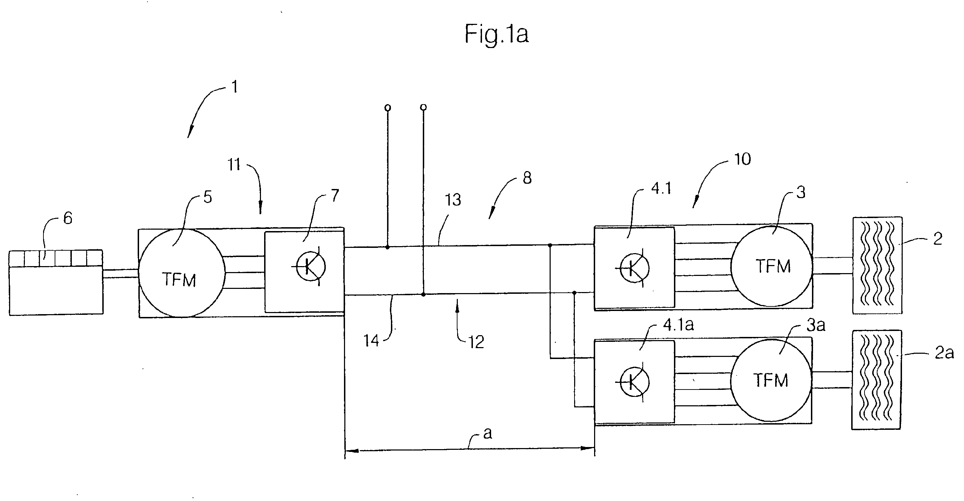

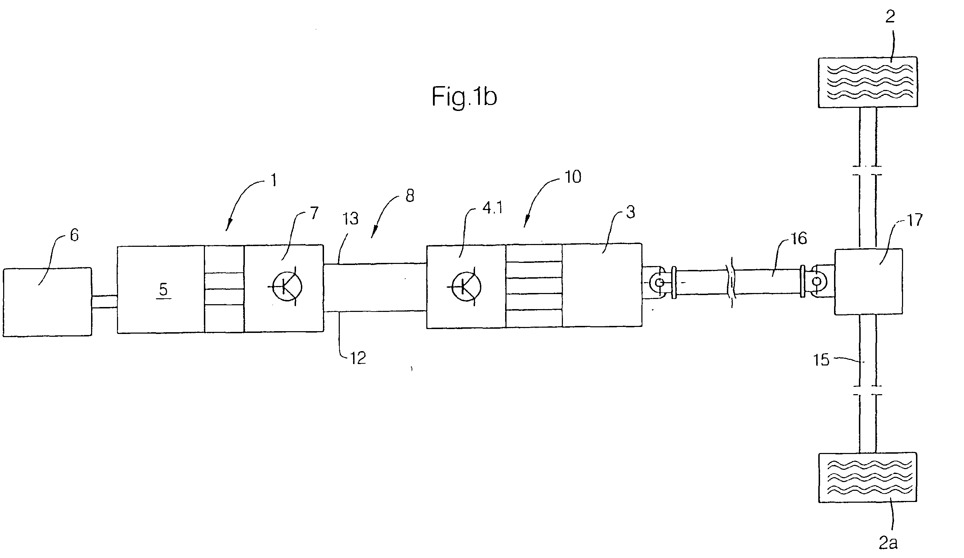

Die Figuren 1a und 1b verdeutlichen anhand einer vereinfachten Darstellung jeweils ein dieselelektrisches Antriebssystem 1 mit einer Kopplung zwischen elektrischen Aggregaten und Umrichtereinheiten. Für gleiche Elemente werden daher gleiche Bezugszeichen verwendet. Das dieselelektrische Antriebssystem 1 umfaßt mindestens einen, mit einem Antriebsrad 2 koppelbaren, als Antriebsmotor fungierenden Elektromotor 3, welcher vorzugsweise als Transversalflußmaschine ausgeführt ist, und welcher von einer Umrichtereinheit 4 in Form einer Wechselrichtereinheit 4.1 mit elektrischer Leistung versorgt wird. Das dieselelektrische Antriebssytem gemäß Figur 1a weist zwei in unmittelbarer Nähe der anzutreibenden Räder 2, 2a angeordnete Elektromotoren 3, 3a auf, welche auch als Radantriebsmotoren bezeichenbar sind. Das dieselelektrische Antriebssystem gemäß Figur 1b ist als Zentralmotorenantrieb ausgeführt. Die Anordnung des Elektromotors 3 als Antriebsmotor erfolgt in räumlicher Entfernung von den anzutreibenden Rädern 2, 2a und der Achse 15, auf welcher die beiden Räder 2, 2a angeordnet sind, zentral im Fahrzeug. Die Koppelung zwischen Elektromotor 3 und der Achse 15 bzw. den anzutreibenden Rädern 2, 2a erfolgt mechanisch über einen Wellenstrang 16 in Form einer Gelenkwelle. Die Aufteilung der Leistung auf die beiden Räder 2, 2a erfolgt mittels eines Differentials 17..

Des weiteren umfaßt das Antriebssystem 1 eine im Traktionsbetrieb, d.h. bei Leistungsübertragung von einer Verbrennungskraftmaschine 6 auf die Antriebsräder 2, als Generator betreibbare elektrische Maschine 5, welche ebenfalls vorzugsweise als Transversalflußmaschine ausgeführt ist. Die wenigstens im Traktionsbetrieb als Generator betreibbare elektrische Maschine 5 ist mechanisch mit der Verbrennungskraftmaschine 6 koppelbar, vorzugsweise ist diese Kopplung starr ausgeführt. Es besteht jedoch auch die Möglichkeit, zusätzliche Dämpfungseinrichtungen vorzusehen. Weiterhin denkbar ist das Vorsehen einer Kupplung oder zusätzlicher Kraftübertragungseinrichtungen zwischen der als Generator betreibbaren elektrischen Maschine 5 und der Verbrennungskraftmaschine 6. Zur Steuerung der erzeugbaren elektrischen Leistung wird die als Generator betreibbare elektrische Maschine 5 durch eine Umrichtereinheit 7, welche vorzugsweise als Wechselrichter in Form eines 4-Quadranten-Wechselrichters ausgeführt sein kann, angesteuert.

Die Umrichtereinheiten 4 und 7, welche den elektrischen Aggregaten - der als Generator betreibbaren elektrischen Maschine 5 und dem als Antriebsmotor fungierenden Elektromotor 3 - zugeordnet sind, sind über einen Spannungszwischenkreis 8 miteinander gekoppelt. Der Spannungszwischenkreis 8 ist vorzugsweise als Gleichspannungszwischenkreis ausgeführt. Die Umrichtereinheiten 4 und 7 sind mit den jeweiligen elektrischen Aggregaten zu einer baulichen Einheit zusammengefaßt. Dabei bildet die Umrichtereinheit 4 mit dem als Antriebsmotor fungierenden Elektromotor 3 eine bauliche Einheit 10 und die der als Generator betreibbaren elektrischen Maschine 5 zugeordnete Umrichtereinheit 7 mit dieser eine bauliche Einheit 11. Die baulichen Einheiten 10 und 11, welche durch eine räumlich nahe Anordnung der Umrichtereinheiten 4 bzw. 7 an die elektrischen Aggregate 3 bzw. 5 charakterisiert sind, sind räumlich getrennt voneinander mit einem Abstand a in Kraftflußrichtung im Traktionsbetrieb betrachtet angeordnet. Die Realisierung des Spannungszwischenkreises 8 erfolgt dabei über die Kopplung der einzelnen Umrichtereinheiten, im einzelnen der Umrichtereinheit 4 und der Umrichtereinheit 7 mittels entsprechender Mittel 12 zur elektrischen Kopplung. Die Mittel zur elektrischen Kopplung 12 umfassen dabei die erforderlichen Verbindungskabel, hier die Verbindungskabel 13 und 14.

Die Baueinheiten 10 bzw. 11 werden dabei wenigstens durch die elektrische Kopplung zwischen den Umrichtereinheiten 4 bzw. 7 mit den elektrischen Aggregaten 3 bzw. 5 realisiert. Dazu weist im einzelnen hier nicht dargestellt jedes der elektrischen Aggregate - die als Generator betreibbare elektrische Maschine 5 und der als Fahrmotor fungierende Elektromotor 3 - Anschlüsse auf, welche mit dazu komplementären Anschlüssen an den diesen elektrischen Aggregaten zugeordneten Umrichtereinheiten 4 bzw. 7 bei Kopplung in Wirkverbindung treten. Entsprechend der Anordnung der Umrichtereinheiten 4 bzw. 7 an den elektrischen Aggregaten besteht die Möglichkeit, bereits allein mit den Mitteln zur Realisierung der elektrischen Kopplung zwischen Umrichtereinheit 4 bzw. 7 und elektrischem Aggregat 3 bzw. 5 eine Fixierung der Umrichtereinheit 4 bzw. 7 am elektrischen Aggregat zu realisieren. Die Mittel zur elektrischen Kopplung, welche zueinander komplementär ausgeführte Verbindungselemente umfassen, bilden dann gleichzeitig die Mittel zur mechanischen Verbindung zwischen der Umrichtereinheit 4 bzw. 7 und dem elektrischen Aggregat 3 bzw. 5.

Denkbar sind des weiteren hier nicht dargestellte technische Beispiele, bei welchen Mittel zur zusätzlichen mechanischen Kopplung zwischen der Umrichtereinheit und dem entsprechenden elektrischen Aggregat vorgesehen sind. Im einfachsten Fall wird dies durch eine zusätzliche Befestigung der Umrichtereinheit, beispielsweise des Gehäuses der Umrichtereinheit 4 bzw. der Umrichtereinheit 7, am als Fahrmotor fungierenden Elektromotor 3 bzw. der als Generator betreibbaren elektrischen Maschine 5, realisiert. Die konkrete Ausgestaltung der Kopplung liegt dabei im Ermessen des Fachmannes und hängt im einzelnen von den für den Einsatz vorgesehenen Umrichtereinheiten, insbesondere deren Abmessungen und Gewicht sowie Anordnung am zugehörigen elektrischen Aggregat, ab.

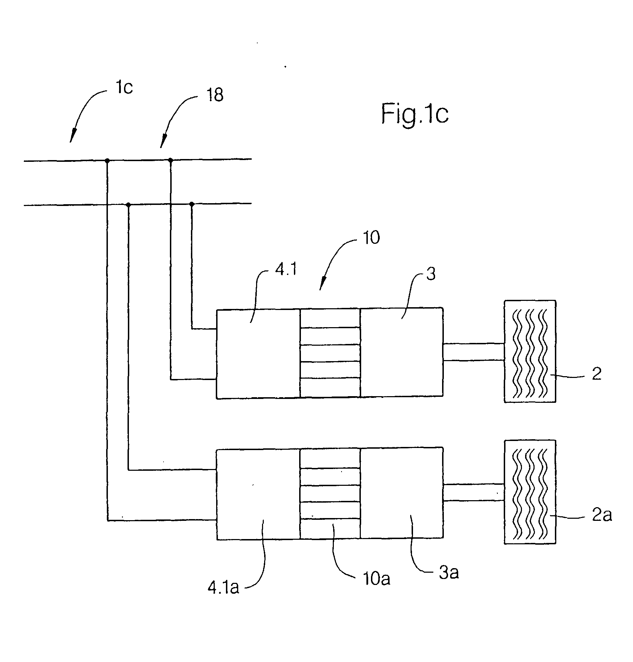

Die Fig. 1c verdeutlicht eine weiteres technisches Beispiel der Zusammenfassung von Umrichtereinheit und elektrischem Aggregat, insbesondere als Antriebsmotor fungierender Elektromotor 3, 3a für den Einsatz in einem elektrischen Antriebssytem 1c. Der Grundaufbau bezüglich der Koppelung zwischen dem oder den als Antriebsmotoren fungierenden Elektromotoren 3, 3a mit den anzutreibenden Rädern kann analog wie in den Figuren 1a oder 1b bechrieben erfolgen. Die Figur 1c verdeutlicht beispielhaft eine Koppelungsmöglichkeit entsprechend Fig. 1a. Als Antriebsquelle fungiert hier jedoch eine andere Energiequelle. Im dargestellten Ausführungsbeispiel wird die Leistung elektrisch über eine Oberleitung 18 den einzelnen Elektromotoren 3, 3a zugeführt. Andere Energiequellen, beispielsweise in Form von Brennstoffzellen oder Energiespeichereinrichtungen sind ebenfalls denkbar.

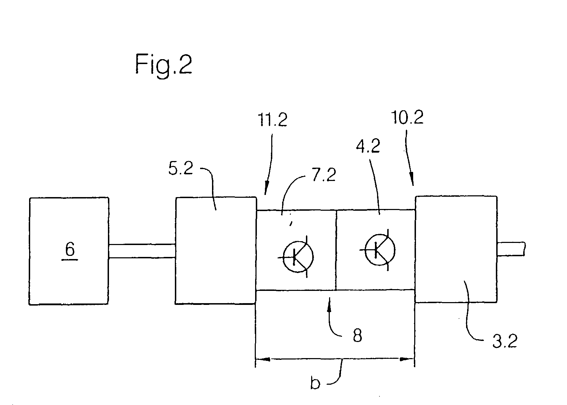

Die Figur 2 verdeutlicht ein Antriebssystem 1, das nicht Bestandteil der Erfindung ist insbesondere für den Einsatz in einem Zentralmotorenantrieb, mit einer weiteren Ausgestaltung der Kopplung zwischen den aus Umrichtereinheiten und elektrischem Aggregat gebildeten Baueinheiten 10 bzw. 11 bzw. deren räumlicher Anordnung zueinander. Der Grundaufbau des Antriebssystems entspricht im wesentlichen dem in der Figur 1 beschriebenen, weshalb für gleiche Elemente die gleichen Bezugszeichen verwendet werden. Auch hier sind in Kraftflußrichtung betrachtet die beiden elektrischen Aggregate, als Generator betreibare elektrische Maschine 5 und als Fahrmotor fungierenden Elektromotor 3, räumlich getrennt voneinander angeordnet. Der Abstand in Kraftflußrichtung ist dabei mit b bezeichnet und bezieht sich im wesentlichen auf die Abmessungen an den elektrischen Aggregaten, welche den geringsten Abstand zueinander aufweisen. Die aus der als Generator betreibbaren elektrischen Maschine 5.2 und der dieser zugeordneten Umrichtereinheit 7.2 gebildete Baueinheit 11.2 und die aus dem als Fahrmotor fungierenden Elektromotor 3.2 und der diesem zugeordneten Umrichtereinheit 4.2 gebildete Baueinheit 10.2 sind in Einbaulage betrachtet aneinander angrenzend angeordnet. Die Umrichtereinheiten 7.2 und 4.2 sind dabei ebenfalls in Einbaulage betrachtet aneinander angrenzend angeordnet. Beide Umrichtereinheiten 7.2 und 4.2 sind dazu derart konzipiert, daß diesen Mittel zugeordnet sind, welche eine elektrische Kopplung untereinander ermöglichen. Insbesondere weisen dazu die beiden Umrichtereinheiten 7.2 und 4.2 zueinander komplementäre elektrische Verbindungsmittel auf, welche bei Realisierung der elektrischen Kopplung die Ausbildung eines Spannungszwischenkreises ermöglichen. Im einfachsten Fall sind die Umrichtereinheiten als modulare Baueinheiten konzipiert, welche eine Vielzahl von elektrischen Elementen enthalten können, welche in einem gemeinsamen Gehäuse integriert sind, wobei am Gehäuse Verbindungsmittel zur elektrischen Kopplung mit anderen elektrischen Aggregaten oder anderen Umrichtereinheiten vorgesehen sind. Auch in diesem Fall können beide Umrichtereinheiten 4.2 und 7.2 lediglich durch die elektrische Kopplung miteinander verbunden werden. Vorzugsweise und in Abhängigkeit von der Einbaulage und der Lage der zur elektrischen Kopplung verwendeten Bauelemente können zusätzlich Mittel zur mechanischen Kopplung zwischen den beiden Umrichtereinheiten 4.2 und 7.2 vorgesehen werden. Diese Mittel können vielgestaltig ausgeführt werden. Im einfachsten Fall erfolgt die Kopplung über die Gehäuse der Umrichtereinheiten 4.2 und 7.2. Andererseits ist es ebenfalls denkbar, daß durch die Fixierung der elektrischen Aggregate 3.2 und 5.2 die einzelnen Umrichtereinheiten 4.2 und 7.2 derart in ihrer Lage zueinander fixierbar sind, daß lediglich eine elektrische Kopplung erforderlich ist.

Die Figur 3 verdeutlicht die erfindungsgemäße Kopplung der Baueinheiten 10.3, welche aus dem als Fahrmotor fungierenden Elektromotor 3.3 und der dieser zugeordneten Umrichtereinheit 4.3 gebildet ist, und der Baueinheit 11.3, welche aus der als Generator betreibbaren elektrischen Maschine 5.3 und der Umrichtereinheit 7.3 gebildet wird. Diese Möglichkeit stellt dabei eine besonders kompakte Ausführung des Gesamtantriebssystems 1.3 dar. Die Umrichtereinheiten 4.3 und 7.3 sind den elektrischen Aggregaten 3.3 bzw. 5.3 derart zugeordnet, daß die Realsierung der elektrischen Kopplung zwischen den Umrichtereinheiten 4.3 und 7.3 in aneinander angrenzender Weise erfolgt und gleichzeitig auch die Möglichkeit gegeben ist, die einzelnen elektrischen Aggregate - als Fahrmotor fungierender Elektromotor 3.3 und als Generator betreibbare elektrische Maschine 5.3 - ebenfalls in aneinander angrenzender Weise anzuordnen. Dabei besteht die Möglichkeit, die als Generator betreibbare elektrische Maschine 5.3 und den als Fahrmotor fungierenden Elektromotor 3.3, insbesondere deren Gehäuse, mechanisch miteinander zu verbinden. Vorzugsweise sind die Kopplungsebenen zur Realisierung der elektrischen und eventuell zusätzlichen Kopplung der beiden Umrichtereinheiten 4.3 und 7.3 sowie der als Generator betreibbaren elektrischen Maschine 5.3 und dem als Fahrmotor fungierenden Elektromotor 3.3 in einer gemeinsamen Ebene angeordnet. Die Kopplungsebene für die elektrische Kopplung der beiden Umrichtereinheiten 4.3 und 7.3 ist hier mit K1 bezeichnet und die Kopplungsebene zur mechanischen Kopplung zwischen Elektromotor 3.3 und der als Generator betreibbaren elektrischen Maschine 5.3 ist hier mit K2 bezeichnet. In diesem Fall besteht die Möglichkeit, den elektrischen Aggregaten 3.3 und 5.3 einem gemeinsamen Kühlkreislauf zuzuordnen, wobei durch die räumlich nahe Anordnung der Umrichtereinheiten 7.3 bzw. 4.3 zu den elektrischen Aggregaten 5.3 bzw. 3.3 zusätzlich ein Kühleffekt für die Umrichtereinheiten durch indirekte Kühlung erzielt wird.

In Analogie gilt diese Aussage auch für eine, hier nicht im einzelnen dargestellte Ausführung der mechanischen Verbindung zwischen Generator 5.3 und Elektromotor 3.3, wobei jedoch die Umrichtereinheiten derart den elektrischen Aggregaten zugeordnet sind, daß diese über kurze Verbindungsleitungen elektrisch miteinander koppelbar sind.

Die Teile der erfindungsgemäßen Lösung, nämlich bei der als Generator betreibbaren elektrischen Maschine und dem als Fahrmotor fungierenden Elektromotor anstelle des Klemmkastens bereits die Umrichtereinheit zu integrieren, ermöglichen es, daß auf zusätzliche Leistungskabel und Kühlwasserleitungen, welche bisher die Umrichter mit der als Generator betreibbaren elektrischen Maschine bzw. dem als Fahrmotor fungierenden Elektromotor verbunden haben, verzichtet werden kann. Die Ausführung gemäß der Figur 3, welche erfindungsgemäß vorschlägt, die als Generator betreibbare elektrische Maschine 5.3 und den als Fahrmotor fungierenden Elektromotor 3.3 zu einer Einheit zusammenzufassen, ermöglicht es, daß zusätzlich auch noch die einzelnen Verbindungsleitungen zwischen diesen beiden Aggregaten für Strom und Kühlflüssigkeit entfallen können. Durch die räumlich nahe Anordnung sind Isolationsschäden an Leistungskabeln und Leckagen im Kühlkreislauf vermeidbar, was insbesondere dadurch begünstigt wird, daß die gesamte Elektronik und Teile von Leitungssträngen in der Umrichtereinheit, welche als handelbare Baueinheit vorhanden ist, integriert sind und somit keinerlei Schädigungen durch Umwelteinflüsse ausgesetzt werden. Die elektromagnetische Verträglichkeits-Schirmung ist einfacher zu realisieren und muß nicht bei jedem Einbaumuster neu vorgenommen werden. Die Schirmung selbst muß nur als Typenprüfung für die jeweilige Einheit aus Umrichtereinheit und elektrischem Aggregat abgenommen werden und ist somit nicht mehr für jeden einzelnen Fahrzeugtyp entsprechend dem Einbau der einzelnen Elemente extra erforderlich. Für den Fahrzeughersteller, welcher das Antriebssystem im Fahrzeug integriert, entfällt die aufwendige Installation von Leistungskabeln und zusätzlichen Kühlwasserleitungen. Die Montage gestaltet sich ebenfalls sehr einfach. Durch den Wegfall von zusätzlichen Verkabelungen und Führungen für Kühlmittel wird Bauraum gespart. Die Integration der Umrichtereinheit mit dem elektrischen Aggregat zu einer Baueinheit vergrößert dessen Bauhöhe bzw. -breite nur unwesentlich, weshalb für die elektrischen Aggregate kaum zusätzlicher Bauraum zur Verfügung gestellt werden muß.

Für die konkrete Ausgestaltung der erfindungsgemäßen Grundidee der Zusammenfassung von elektrischem Aggregat und Umrichtereinheit zu einer Baueinheit bestehen eine Vielzahl von Möglichkeiten. Insbesondere die konkrete Ausgestaltung der elektrischen Kopplung und der zusätzlichen mechanischen Kopplung zwischen Umrichtereinheit und elektrischem Aggregat liegt dabei im Ermessen des Fachmannes und erfolgt entsprechend des Einsatzfalls und der Gegebenheiten der verwendeten standardisierten Elemente.

## Patentansprüche

1. Antriebssystem (1) für Fahrzeuge, insbesondere Nutzkraftwagen
1.1 mit mindestens einem, mit wenigstens einem Antriebsrad (2) wenigstens mittelbar koppelbaren Elektromotor (3);
1.2 mit einer mechanisch mit einer Verbrennungskraftmaschine (6) koppelbaren und im Traktionsbetrieb als Generator betreibbaren elektrischen Maschine (5);
1.3 der als Generator betreibbaren elektrischen Maschine (5) und dem als Fahrmotor fungierenden Elektromotor (3) sind jeweils eine mit diesen elektrisch koppelbare Umrichtereinheit (4, 7) zugeordnet;
1.4 der Elektromotor (3) und die als Generator betreibbare elektrische Maschine (5) sind über einen Spannungszwischenkreis (8) elektrisch miteinander koppelbar;
1.5 wenigstens ein elektrisches Aggregat - der als Fahrmotor betreibbare Elektromotor (3) oder die als Generator betreibbare elektrische Maschine (5) - bilden mit der ihr zugeordneten Umrichtereinheit (4, 7) eine bauliche Einheit (10, 11);
**gekennzeichnet durch** die folgenden Merkmale;
1.6 die als Generator betreibbare elektrische Maschine (5) und der als Fahrmotor fungierende Elektromotor (13) sind in Einbaulage aneinander angrenzend angeordnet, wobei wenigstens ein Teil der Berührungsfläche beider elektrischer Aggregate **durch** eine Ebene K2 charakterisierbar ist;
1.7 die Zuordnung der Umrichtereinheiten zur Bildung der baulichen Einheiten mit den elektrischen Aggregaten derart erfolgt, dass die Berührungsebene der Umrichtereinheiten mit der Berührungsebene der elektrischen Aggregate zusammenfällt.

2. Antriebssystem nach Anspruch 1, **dadurch gekennzeichnet, dass** jeder Elektromotor (3) und die als Generator betreibbare elektrische Maschine (5) mit den ihnen zugeordneten Umrichtereinheiten (4, 7) eine bauliche Einheit (10, 11) bilden

3. Antriebssytem nach einem der Ansprüche 1 oder 2, **dadurch gekennzeichnet, dass** die der als Generator betreibbaren elektrischen Maschine (5) zugeordnete Umrichtereinheit (7) und die dem als Fahrmotor fungierenden Elektromotor (3) zugeordnete Umrichtereinheit (4) zu einer baulichen Einheit zusammenfassbar sind.

4. Antriebssystem nach Anspruch 3, **dadurch gekennzeichnet, dass** Mittel zur mechanischen Verbindung der beiden Umrichtereinheiten (4, 7) vorgesehen sind.

5. Vorrichtung nach einem der Ansprüche 3 oder 4, **dadurch gekennzeichnet, dass** die Mittel zur elektrischen Kopplung der Umrichtereinheiten und die Mittel zur mechanischen Kopplung von den gleichen Bauelementen gebildet werden.

## Claims

1. A drive system (1) for vehicles, in particular commercial vehicles
1.1 with at least one electric motor (3) which can be coupled at least indirectly to at least one drive wheel (2);
1.2 with an electrical machine (5) which can be coupled mechanically to an internal combustion machine (6) and which can be operated as a generator in traction mode;
1.3 converter devices (4, 7) are each associated to the electrical machine (5) which can be operated as a generator and to the electric motor (3) operating as a traction motor, whereas said devices can be coupled electrically to said machine/motor.
1.4 the electric motor (3) and the electrical machine (5) which can operated as a generator which can be coupled electrically to one another via an intermediate voltage circuit (8);
1.5 at least one electrical unit (the electric motor (3) which can operated as a traction motor or the electrical machine (5) which can operated as a generator) form a structural unit (10, 11) with the converter devices (4, 7) associated therewith;
**characterised by** the following features;
1.6 the electrical machine (5) which can operated as a generator and the electric motor (13) operating as a traction motor are adjoining one another in installation position, whereas at least a portion of the contact surface of both electrical units can be **characterised by** a plane K2;
1.7 the arrangement of the converter devices to form the structural units with the electrical units is such that the contact plane of the converter devices coincides with the contact plane of the electrical units.

2. A drive system according to claim 1, **characterised in that** each electric motor (3) and the electrical machine (5) which can operated as a generator form a structural unit (10, 11) with the converter devices (4, 7) associated therewith.

3. A drive system according to one of the claims 1 or 2, **characterised in that** the converter device (7) associated with the electrical machine (5) which can be operated as a generator and the converter device (4) associated with the electric motor (3) operating as a traction motor can be grouped into a structural unit.

4. A drive system according to claim 3, **characterised in that** means are provided for mechanical connection of both converter devices (4, 7)

5. A device according to one of the claims 3 or 4, **characterised in that** the means for electrical coupling of the converter devices and the means for mechanical coupling are formed by the same constitutive elements.

## Revendications

1. Système d'entraînement (1) pour véhicules, en particulier véhicules utilitaires
1.1 pourvu au moins d'un moteur électrique (3) pouvant s'accoupler au moins indirectement à au moins une roue d'entraînement (2);
1.2 avec une machine électrique (5) pouvant s'accoupler mécaniquement à un moteur à combustion (6) pouvant fonctionner comme générateur en mode traction;
1.3 un dispositif convertisseur (4, 7) est solidaire de la machine électrique (5) pouvant fonctionner comme générateur et un autre dispositif convertisseur est solidaire du moteur électrique (3) fonctionnant comme moteur de traction, ces deux dispositifs pouvant s'accoupler électriquement à ceux-ci;
1.4 le moteur électrique (3) et la machine électrique (5) pouvant fonctionner comme générateur bielle peuvent s'accoupler électriquement l'un à l'autre par le biais d'un circuit intermédiaire de tension (8);
1.5 au moins une unité électrique (le moteur électrique (3) pouvant fonctionner comme moteur de traction ou bien la machine électrique (5) pouvant fonctionner comme générateur) constituent une unité structurelle (10, 11) avec le dispositif convertisseur (4, 7) associé à celle-ci;
présentant les caractéristiques suivantes;
1.6 la machine électrique (5) pouvant fonctionner comme générateur et le moteur électrique fonctionnant comme moteur de traction (13) sont disposés de manière adjacente l'un à l'autre en position d'installation, tandis qu'au moins une partie de la surface de contact des deux unités électriques peut être **caractérisée par** un plan K2;
1.7 l'agencement des dispositifs convertisseurs permettant de constituer les unités structurelles avec les unités électriques est tel que le plan de contact des dispositifs convertisseurs coïncide avec le plan de contact des unités électriques.

2. Système d'entraînement selon la revendication 1, **caractérisé en ce que** chaque moteur électrique (3) et la machine électrique (5) pouvant fonctionner comme générateur forment une unité structurelle (10,11) avec les dispositifs convertisseurs (4, 7) associés à ceux -ci.

3. Système d'entraînement selon l'une des revendications 1 ou 2, **caractérisé en ce que** le dispositif convertisseur (7) associé à la machine électrique (5) pouvant fonctionner comme générateur et le dispositif convertisseur (4) associé au moteur électrique (3) fonctionnant comme moteur de traction peuvent être regroupés en une unité structurelle.

4. Système d'entraînement selon la revendication 3, **caractérisé en ce que** des moyens sont prévus pour assurer la liaison mécanique des deux dispositifs convertisseurs (4, 7).

5. Dispositif selon l'une des revendications 3 ou 4, **caractérisé en ce que** les moyens assurant la liaison électrique des dispositifs convertisseurs et les moyens assurant la liaison mécanique sont constitués des mêmes éléments de construction.
